# EUROPEAN PATENT SPECIFICATION

(11) **EP 3 862 122 B1**
(45) Date of publication and mention of the grant of the patent: **18.09.2024**
(21) Application number: 21156359.8
(22) Date of filing: 10.02.2021
(51) Int. Cl.: B23K 9/04, B22F 12/00, B23K 9/133, B23K 9/173, B23K 35/02, B33Y 30/00

(54) **WELDING OR ADDITIVE MANUFACTURING DUAL WIRE DRIVE SYSTEM**
DOPPELDRAHTZUFÜHRSYSTEM ZUM SCHWEISSEN ODER ZUR GENERATIVEN FERTIGUNG
SYSTÈME D'ENTRAÎNEMENT DE DEUX FILS POUR LE SOUDAGE OU LA FABRICATION ADDITIVE

(30) Priority: 10.02.2020 US 202016786077
(43) Date of publication of application: 11.08.2021
(73) Proprietor: Lincoln Global, Inc., Santa Fe Springs, CA 90670 (US)
(72) Inventor: BOMBARDIER, Jean Luc, 44160 Crossac (FR); PETERS, Steven R., Huntsburg, OH Ohio 44046 (US); MEHLMAN, Alexander C., Strongsville, OH Ohio 44149 (US); WEEKS, Matthew A., Walloon, Queensland 4305 (AU); PETOT, Bradford W., South Euclid, OH Ohio 44121 (US)
(74) Representative: Grosse Schumacher Knauer von Hirschhausen

(56) References cited:
- EP-A1- 3 693 116
- EP-A2- 3 656 497
- DD-A1- 129 180
- JP-A- H10 113 771
- JP-A- S5 144 542
- US-A- 2 866 079

## Description

### Field of the Invention

The invention relates to a welding or additive manufacturing wire drive system according to the preamble of claim 1 (see for example US 2 866 079 A). Devices, systems, and methods consistent with the invention relate to material deposition with a dual wire configuration.

### Description of Related Art

When welding, it is often desirable to increase the width of the weld bead or increase the length of the weld puddle during welding. There can be many different reasons for this desire, which are well known in the welding industry. For example, it may be desirable to elongate the weld puddle to keep the weld and filler metals molten for a longer period of time so as to reduce porosity. That is, if the weld puddle is molten for a longer period of time there is more time for harmful gases to escape the weld bead before the bead solidifies. Further, it may desirable to increase the width of a weld bead so as to cover wider weld gap or to increase a wire deposition rate. In both cases, it is common to use an increased electrode diameter. The increased diameter will result in both an elongated and widened weld puddle, even though it may be only desired to increase the width or the length of the weld puddle, but not both. However, this is not without its disadvantages. Specifically, because a larger electrode is employed more energy is needed in the welding arc to facilitate proper welding. This increase in energy causes an increase in heat input into the weld and will result in the use of more energy in the welding operation, because of the larger diameter of the electrode used. Further, it may create a weld bead profile or cross-section that is not ideal for certain mechanical applications. Rather than increasing the diameter of the electrode, it may be desirable to use two smaller electrodes simultaneously.

### BRIEF SUMMARY OF THE INVENTION

The following summary presents a simplified summary in order to provide a basic understanding of some aspects of the devices, systems and/or methods discussed herein. This summary is not an extensive overview of the devices, systems and/or methods discussed herein. It is not intended to identify critical elements or to delineate the scope of such devices, systems and/or methods. Its sole purpose is to present some concepts in a simplified form as a prelude to the more detailed description that is presented later.

In accordance with of the present invention, provided is a welding or additive manufacturing wire drive system as defined in claim 1. The system includes a welding wire spool, a first drive roll, and a second drive roll. One or both of the first drive roll and the second drive roll has a circumferential groove. The system includes a first welding wire, drawn from the welding wire spool, and located between the first drive roll and the second drive roll in the circumferential groove, and a second welding wire, drawn from the welding wire spool, and located between the first drive roll and the second drive roll in the circumferential groove. The first welding wire contacts the second welding wire between the first drive roll and the second drive roll. The first welding wire further contacts a first sidewall portion of the circumferential groove, and the second welding wire further contacts a second sidewall portion of the circumferential groove. Both of the first welding wire and the second welding wire are radially offset from a central portion of the circumferential groove.

Preferred embodiments of the present invention are defined in the dependent claims.

Further embodiments are given in the ensuing description, drawings and claims.

### BRIEF DESCRIPTION OF THE DRAWINGS

The foregoing and other aspects of the invention will become apparent to those skilled in the art to which the invention relates upon reading the following description with reference to the accompanying drawings, in which:
FIG. 1 is a schematic diagram of an example welding system;
FIG. 2 is a perspective view of an example welding system;
FIG. 3 is a perspective view of an example welding system;
FIG. 4 is a perspective view of an example welding wire spool;
FIG. 5 is a perspective view of an example welding wire spool;
FIG. 6 is a perspective view of an example welding wire spool;
FIG. 7 is a side view of an example wire feeder;
FIG. 8 illustrates an example drive roll;
FIG. 9 is a perspective view of the example drive roll;
FIG. 10 illustrates a cross section of drives rolls feeding dual wires;
FIG. 11 illustrates a cross section of drives rolls feeding dual wires;
FIG. 12 illustrates a cross section of drives rolls feeding dual wires;
FIG. 13 illustrates a cross section of drives rolls feeding dual wires;
FIG. 14 illustrates a cross section of drives rolls feeding dual wires;
FIG. 15 illustrates a cross section of drives rolls feeding dual wires; and
FIG. 16 illustrates a cross section of drives rolls feeding dual wires.

### DETAILED DESCRIPTION OF THE INVENTION

Exemplary embodiments of the invention will now be described below by reference to the attached Figures. The described exemplary embodiments are intended to assist the understanding of the invention, and are not intended to limit the scope of the invention in any way. Like reference numerals refer to like elements throughout.

Embodiments of the present invention are described herein in the context of a welding system. Example welding systems include gas metal arc welding (GMAW) systems, submerged arc welding (SAW) systems, flux-cored arc welding (FCAW) systems, metal-cored arc welding (MCAW) systems, and the like. Further, while the electrodes described herein can be solid electrodes, embodiments of the present invention are not limited to the use of solid electrodes. For example, flux-cored electrodes and metal-cored electrodes can also be used without departing from the spirit or scope of the present invention. Further, embodiments of the present invention can also be used in manual, semi-automatic and robotic welding operations. Because such systems are well known, they will not be described in detail herein.

Embodiments of the present invention will be discussed in the context of a welding system. However, in addition to welding operations, embodiments can be used in additive manufacturing processes and other welding-type processes involving driven wire electrodes (e.g., hardfacing).

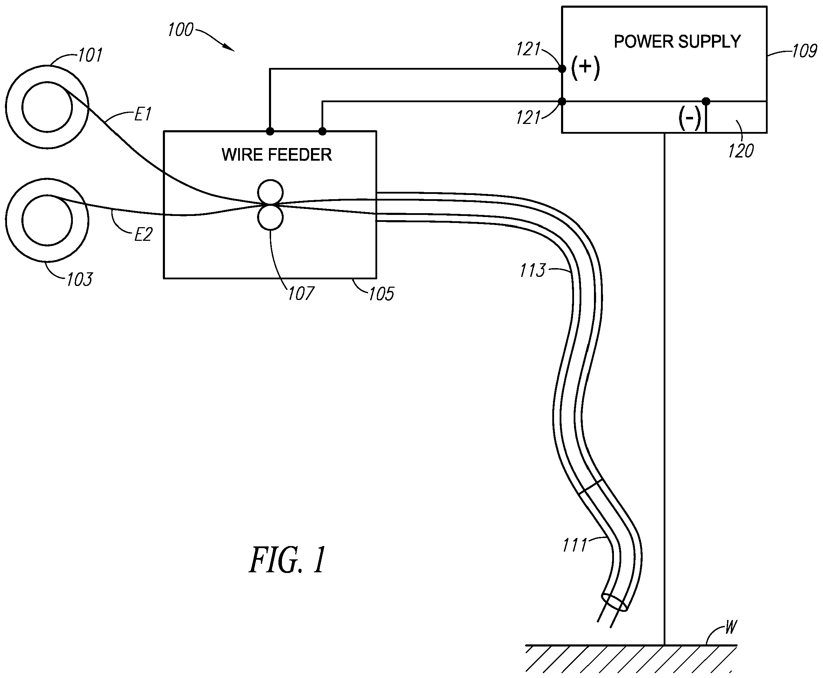

Turning now to the Figures, Figure 1 depicts an exemplary embodiment of a welding system 100. The welding system 100 contains a welding power source or power supply 109 which is coupled to both a welding torch 111 and a wire feeder 105. The power supply 109 can be any known type of welding power source capable of delivering welding current and welding waveforms, for example, pulse spray, STT and/or short arc type welding waveforms. Because the construction, design and operation of such power supplies are well known, they need not be described in detail herein. It is also noted that welding power can be supplied by more than one power supply at the same time - again the operation of such systems are known. The power supply 109 can include a controller 120 which is coupled to a user interface to allow a user to input control or welding parameters for the welding operation. The controller 120 can have a processor, CPU, memory etc. to be used to control the operation of the welding process and the generation of welding waveforms. The torch 111 can be constructed similar to known manual, semi-automatic or robotic welding torches and can be of a straight or gooseneck type. The wire feeder 105 draws wire electrodes E1 and E2 from electrode sources 101 and 103, respectively, which can be of any known type, such as reels, spools, containers or the like. The wire feeder 105 employs drive rolls 107 to draw the electrodes or welding wires E1 and E2 and push or pull the electrodes to the torch 111. Details of the drive rolls 107 are discussed further below. The drive rolls 107 and wire feeder 105 are configured for a dual electrode welding operation. That is, they supply both electrodes E1 and E2 simultaneously to the torch 111 for creating an arc and welding the workpiece W. As shown, the wire feeder 105 is operatively connected to the power source 109 consistent with known configurations of welding operations.

Once driven by the drive rolls 107, the electrodes E1 and E2 can be passed through a liner 113 to deliver the electrodes E1 and E2 to the torch 111. The liner 113 is appropriately sized to allow for the passage of the electrodes E1 and E2 to the torch 111. For example, for two 0.030 inch diameter electrodes, a standard 0.0625 inch diameter liner 113 (which is typically used for a single 0.0625 inch diameter electrode) can be used with no modification.

In certain embodiments, the wire electrodes E1, E2 can have different diameters. That is, embodiments of the present invention can use an electrode of a first, larger, diameter and an electrode of a second, smaller, diameter. In such an embodiment, it may be possible to more conveniently weld two workpieces of different thicknesses. For example, the larger electrode can be oriented to the larger workpiece while the smaller electrode can be oriented to the smaller workpiece. Further, embodiments of the present invention can be used for many different types of welding operations including, but not limited to, GMAW, SAW, FCAW, and MCAW. Additionally, embodiments of the present invention can be utilized with different electrode types. For example, it is contemplated that a cored electrode (e.g., flux-cored or metal-cored) can be coupled with a non-cored or solid electrode. Further, electrodes of differing compositions can be used to achieve desired weld properties and composition of the final weld bead. Two different, but compatible, consumables can be combined to create a desired weld joint. For example, compatible consumables such as hardfacing wires, stainless wires, nickel alloys and steel wires of different composition can be combined. As one specific example a mild steel wire can be combined with an overalloyed wire to make a 309 stainless steel composition. This can be advantageous when a single consumable of the type desired does not have desirable weld properties. For example, some consumables for specialized welding provide the desired weld chemistry but are extremely difficult to use and have difficulty providing a satisfactory weld. However, embodiments of the present invention allow for the use of two consumables that are easier to weld with to be combined to create the desired weld chemistry. Embodiments of the present invention can be used to create an alloy/deposit chemistry that is not otherwise commercially available, or otherwise very expensive to manufacture. Thus, two different consumables can be used to obviate the need for an expensive or unavailable consumable. Further, embodiments can be used to create a diluted alloy. For example, a first welding wire could be a common, inexpensive alloy and a second welding wire could be a specialty wire. The resulting deposit would be the average of the two wires, mixed well in the formation of a molten droplet, at the lower average cost of the two wires, over an expensive specialty wire. Further, in some applications, the desired deposit could be unavailable due to the lack of appropriate consumable chemistry, but could be achieved by mixing two standard alloy wires, mixed within the molten droplet and deposited as a single droplet. Further, in some applications, such as the application of wear resistance metals, the desired deposit may be a combination of tungsten carbide particles from one wire and chrome carbide particles from another. Still in another application, a larger wire housing larger particles within is mixed with a smaller wire containing fewer particles or smaller particles, to deposit a mixture of the two wires. Here the expected contribution from each of the wires is proportional to the size of wire. Further, although exemplary embodiments are discussed herein utilizing two wire electrodes simultaneously, other embodiments of the present invention can utilize more than two electrodes. For example, it is contemplated that a three or more electrode configuration can be utilized consistent with the descriptions and discussions set forth herein.

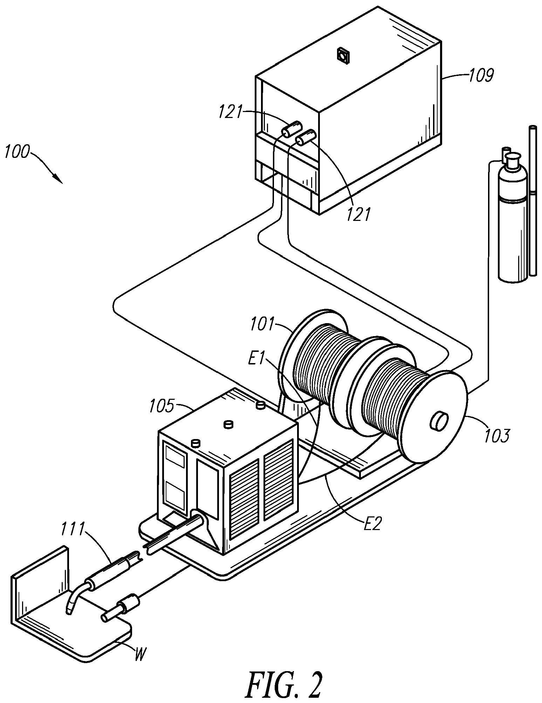

Figure 2 provides a perspective view of the welding system 100. The wire feeder 105 comprises drive rolls for conveying wire electrodes E1, E2 from electrode sources 101, 103, for use in a particular application. The wire electrodes E1, E2, may be drawn continuously from a reel, spool, or container (e.g., a box or a drum), and delivered to the workpiece W, which in the current embodiment is a weldment. The wire feeder 105 may include a drive assembly that utilizes power from one or more locomotive devices, such as an electric motor, that drive the wire electrodes E1, E2 to the application work site or workpiece W.

The welding power supply 109 may receive electrical input power from an outside source (e.g., utility power), that is directed to an onboard transformer and processor-controlled inverter or chopper circuitry, not depicted in the figures. Output from the power supply 109 may be provided through welding output terminals 121 or studs of the welding power supply. A welding gun or torch 111 and wire conduit may be electrically connected to the welding power supply 109 through the welding wire feeder 105 for delivering welding current to the workpiece W in a manner known in the art. It follows that the welding wires E1, E2 are fed through the torch 111 and metered out, i.e. dispensed, at the discretion of the application and/or end user in any manner suitable for conducting the welding process. It is noted that the electrodes E1, E2 conduct electricity for establishing a welding arc, wherein the electrodes are conveyed to the workpiece W having a voltage potential equal to or approximately equal to the output voltage of the welding power supply 109, which may be substantially greater than ground.

Different modes of conveying the wire electrodes E1, E2 are known in the art, an example of which includes pushing the electrodes to the torch 111 via power or torque provided by the locomotive device. Other modes of conveying the electrodes include push/pull modes that utilize multiple locomotive devices. The electrodes E1, E2 are delivered to the torch 111, which may have a trigger or other activation mechanism for dispensing the electrodes at the user's discretion. At times, it may be necessary to deliver the electrodes E1, E2 at varying rates of feed. Therefore, the locomotive device has an output that is adjustable for varying the wire feed speed (WFS) of the electrodes E1, E2. In particular, a drive motor of the wire feeder 105 may be a variable speed motor to adjust the WFS.

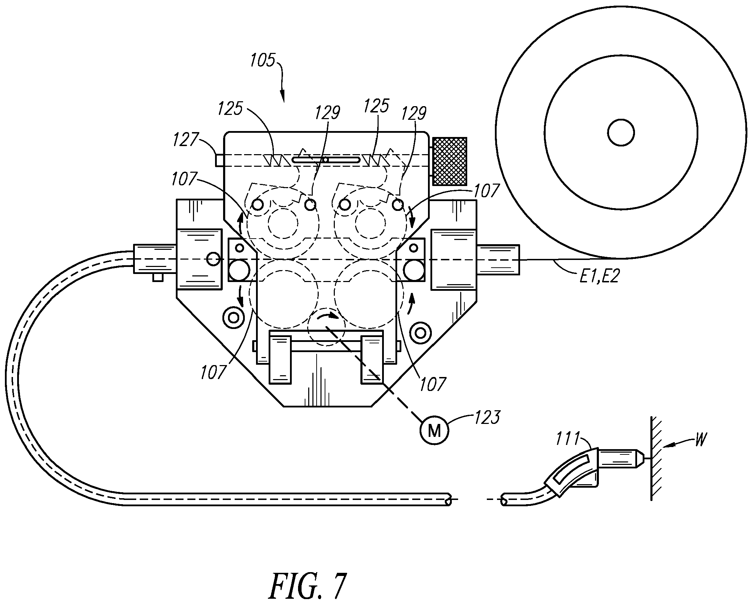

A drive motor 123 is shown in Figure 7. The wire feeder 105 and/or drive motor(s) 123 may draw operating power from the welding power supply 109, or an altogether separate power source. Still any manner of providing power to operate the welding wire feeder 105 and/or the drive motors 123 may be chosen with sound engineering judgment as is appropriate for use with the embodiments of the present invention.

Referring to Figures 2 and 7, the welding wire feeder 105 may include a drive assembly, or drive roll assembly. As mentioned above, the drive motor 123, also called a wire feeder motor, delivers power, i.e. torque, to convey the first and second welding wires E1, E2 through the wire feeder and to the torch 111 and subsequently to the workpiece W. Drive rolls 107 are included that grip the welding wires E1, E2 for pushing or pulling the welding wires in the appropriate direction, i.e. toward the workpiece W. Sets of drive rolls 107 are vertically aligned and have corresponding aligned annular or circumferential grooves through which the wending wires E1, E2 pass simultaneously. It can be seen that the vertically-aligned sets of drive rolls 107 rotate in opposite directions to drive the welding wires E1, E2 through the wire feeder 105. For example, in Figure 7, the upper drive rolls 107 rotate clockwise and the lower drive rolls rotate counterclockwise. The drive rolls 107 may be cylindrical in configuration, or more specifically disk-shaped, although the particular configuration should not be construed as limiting. The surface, i.e. the outer circumference, of the drive rolls 107 may be comprised of a sufficiently hardened material, like steel, that is durable and suitable for gripping the welding wires E1, E2. As shown, the drive rolls 107 may be disposed in pairs along the wire trajectory with each drive roll of the pair being supported on opposing sides of the welding wires E1, E2, such that respective outer circumferential portions of the rolls engage opposite sides of the wires (e.g., from above and below). It is noted that the central axes of respective drive rolls 107 extend substantially parallel with one another and generally transverse to the trajectory of the welding wires E1, E1.

The wire feeder 105 can include a biasing member that biases the vertically-aligned sets of drive rolls 107 toward one another. The biasing member sets the clamping force or compression that the drive rolls 107 apply to the welding wires E1, E2. For example, the wire feeder 105 can include biasing springs 125 that apply a bias force to one or more drive rolls 107 to set the compression that the drive rolls apply to the welding wires E1, E2. In the example embodiment of Figure 7, the biasing springs 125 are mounted to an adjusting rod 127 that can be moved inward and outward to adjust the compression of the biasing springs 125. The force of the biasing springs 125 is transferred to the upper drive rolls 107 via pivoting levers 129. As noted above, the vertically-aligned sets of drive rolls 107 have corresponding aligned annular or circumferential grooves through which the wending wires E1, E2 pass simultaneously. That is, the welding wires E1, E2 are located together in the grooves of an upper drive roll and a lower drive roll. The welding wires E1, E2 are squeezed or compressed within the grooves by the bias force applied by the biasing springs 125 to the drive rolls 107. As will be explained further below, the welding wires E1, E2 are made to contact each other within the grooves when squeezed by the drive rolls 107. In addition to an upward/downward compressive force applied to the welding wires E1, E2, a sideways compressive force is also applied to the welding wires E1, E2 to force them together inside of the grooves. The sideways compressive force is provided through the shape of the sidewalls of the grooves.

Further details regarding the structure of welding wire feeders can be found in U.S. Patent No. 5,816,466 issued on October 6, 1998 and U.S. Patent No. 8,569,653 issued on October 29, 2013.

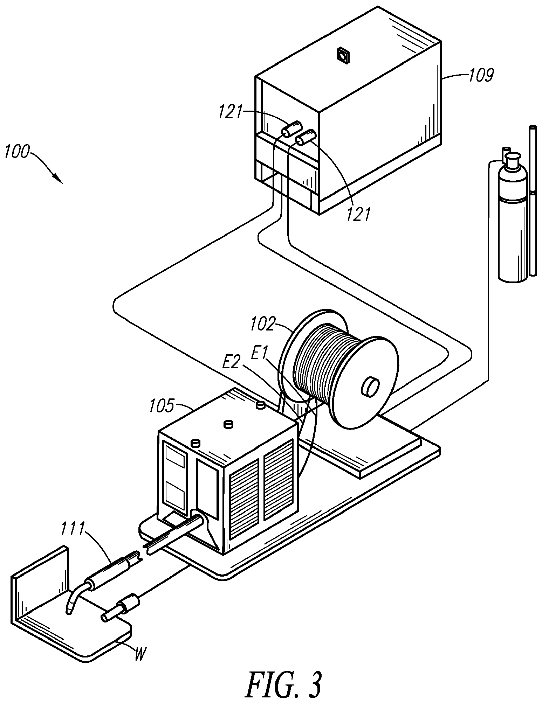

Figure 3 provides a perspective view of the welding system 100 having a single electrode source 102 (e.g. a single welding wire spool, according to the present invention) that provides both wire electrodes E1, E2. In Fig. 3, the wire electrodes E1, E2 are wound on the same spool 102 and are drawn simultaneously therefrom by the wire feeder 105. An advantage of providing both wire electrodes E2, E2 on a single spool 102 is that existing welding systems can be configured to perform dual wire welding with minimal modifications. Existing welding systems would typically have a single spindle for one welding wire spool. The dual wire spool shown in Fig. 3 can be mounted on such a system. By replacing the drive rolls in the wire feeder 105 with drive rolls configured for dual wire feeding, and replacing the contact tip in the torch 111 with a contact tip configured for dual wire welding, a conventional single wire welding system can be readily converted to dual wire welding. As discussed above, the electrodes E1, E2 can have the same composition and diameter, or have different compositions and/or diameters.

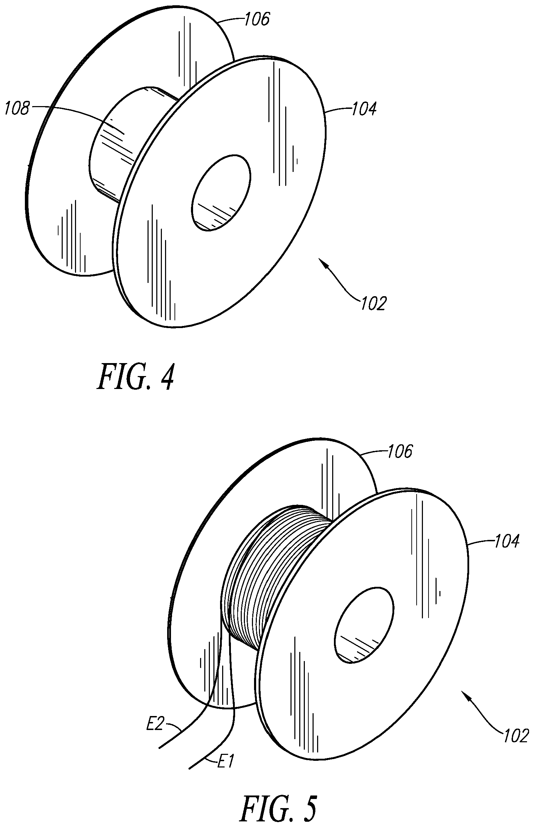

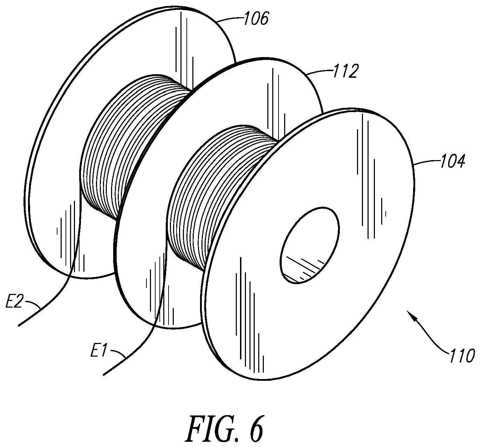

Figure 4 shows the spool 102 without the electrodes wound thereon, and Figure 5 shows the spool with the electrodes E1, E2. The spool 102 has a central barrel 108 located between end flanges 104, 106, and the wire electrodes E1, E2 are both wound on the central barrel between the end flanges. Figure 6 shows a further example spool 110 that has an annular divider 112 located along the central barrel. The annular divider is located between the windings of the electrodes E1, E2 to separate them.

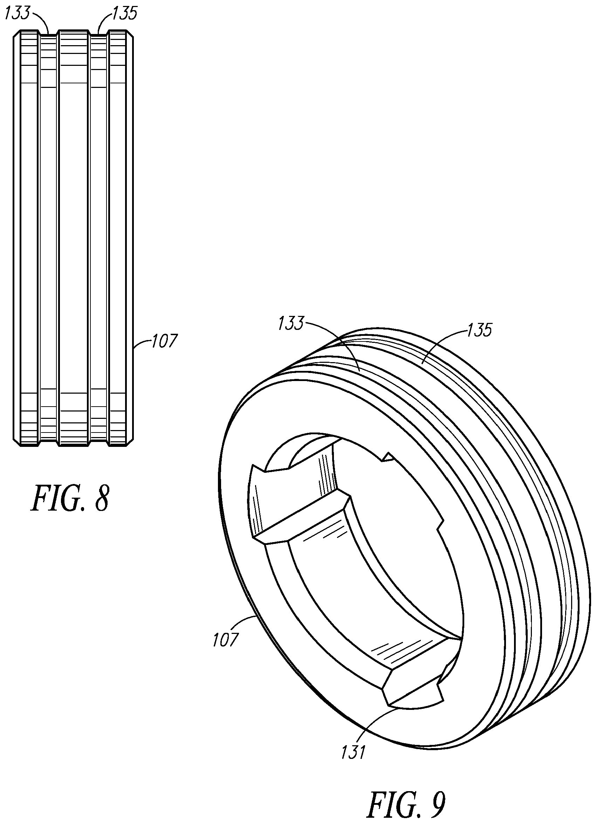

Figures 8 and 9 illustrate an example drive roll 107. The drive roll has a central bore. The inner surface of the bore can include contoured recesses 131 for receiving projections on a driving mechanism, such as a drive gear, to transfer drive torque to the drive roll 107. The drive roll 107 includes one or more annular or circumferential wire receiving grooves 133, 135. The wire receiving grooves 133, 135 are spaced axially along the circumference of the drive roll 107. The wire receiving grooves 133, 135 are designed to receive two welding wires. Example standard welding wire diameters for use with the drive rolls 107 include 0.030 inches, 0.035 inches, 0.040 inches, 0.045 inches, etc. The wire receiving grooves 133, 135 can have the same width and depth as each other, or have different widths and depths to accommodate different sizes or combinations of dual welding wires. If the wire receiving grooves 133, 135 each have the same width and depth, then the drive roll 107 can be reused when one groove is worn out by simply flipping the drive roll over and reinstalling it on the wire feeder. The wire receiving grooves 133, 135 can be configured to simultaneously drive two wires having the same diameter, or two wires having different diameters. In Figure 8, the wire receiving grooves 133, 135 have a trapezoidal shape with straight, angled or inwardly-tapered sidewalls and a flat base extending between the sidewalls. However, the wire receiving grooves 133, 135 could have other shapes besides a trapezoidal shape, such as having a curved, concave groove base for example. In certain embodiments, the grooves 133, 135 can include knurling or other frictional surface treatments to help grip the welding wires.

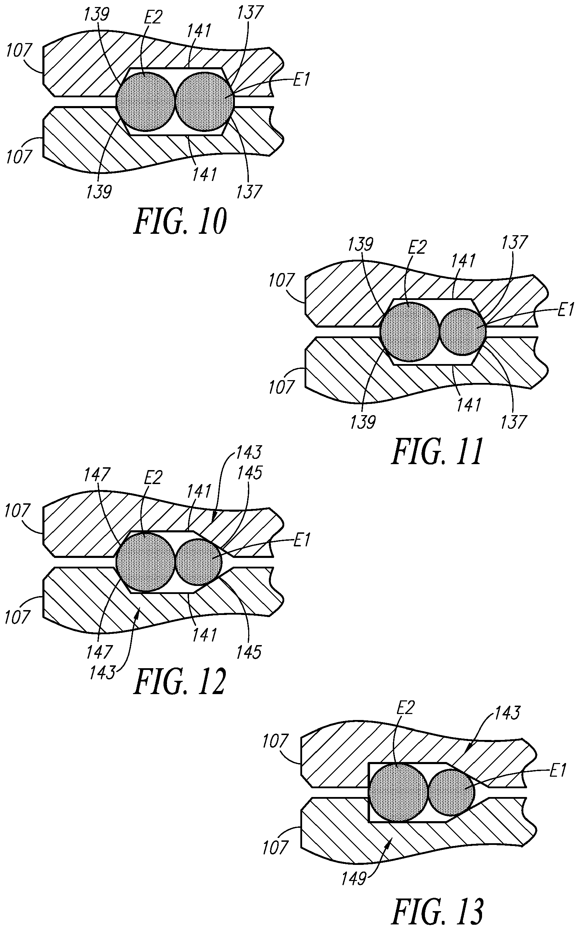

Figures 10 through 16 show partial cross sections of example drive rolls 107 as they would be mounted on a wire feeder for supplying dual welding wires. The drive rolls 107 are biased together to provide a clamping force on the first E1 and the second E2 welding wires. The welding wires E1, E2 are both located in the annular grooves of the upper and lower drive rolls 107. The annular grooves are aligned and can have a trapezoidal shape. In Figure 10, the trapezoidal shape is an isosceles trapezoid formed by an inner sidewall 137, an outer sidewall 139, and a groove base 141 extending between the sidewalls. The isosceles trapezoidal shape is inverted as a cross-sectional recess from the outer circumferential surface of the drive rolls 107.

Due to the bias force applied to the drive rolls 107, the welding wires E1, E2 are clamped in the annular grooves between upper and lower sidewalls 137, 139 forming the grooves and the neighboring welding wire. The welding wires E1, E2 are stably held via three points of contact within the annular grooves. This clamping system can allow both wires to be fed through the wire feeder in a consistent manner. The two welding wires E1, E2 support each other during feeding and pull each other along via friction. Because the inner 137 and outer 139 sidewalls of the annular grooves are angled, they apply both vertical and horizontal clamping forces on the welding wires E1, E2. The horizontal clamping force pushes the welding wires E1, E2 together, causing them to contact each other. In certain embodiments, the welding wires E1, E2 are clamped within the annular grooves so as to be radially offset from both of the groove bases 141. That is, the welding wires E1, E2 are pinned between each other and the angled sidewalls 137, 139 of the grooves such that gaps exist between the welding wires and the groove bases 141. This can be seen clearly in Figure 10.

The clamping system discussed above allows for some variability (e.g., due to manufacturing tolerances) in the diameters of the welding wires E1, E2. If each welding wire E1, E2 had its own dedicated annular groove in the drive rolls 107, and one of the welding wires was slightly larger than the other, then the smaller welding wire might not be adequately clamped between the drive rolls. In such a situation, the larger welding wire would limit the radial displacement of the drive rolls 107 toward each other, thereby preventing proper clamping of the smaller wire. This could lead to feeding problems and so-called birdnesting of the smaller welding wire during feeding. The clamping system discussed above can accommodate wires of different sizes because the clamping system is self-adjusting. As can be seen in Figure 11, when one welding wire E2 is larger than the other E1, the contact point between the wires is shifted axially from a central position within the annular grooves toward the smaller wire. Three points of contact are maintained on each welding wire E1, E2 by the sidewalls 137, 139 of the groove and the neighboring welding wire.

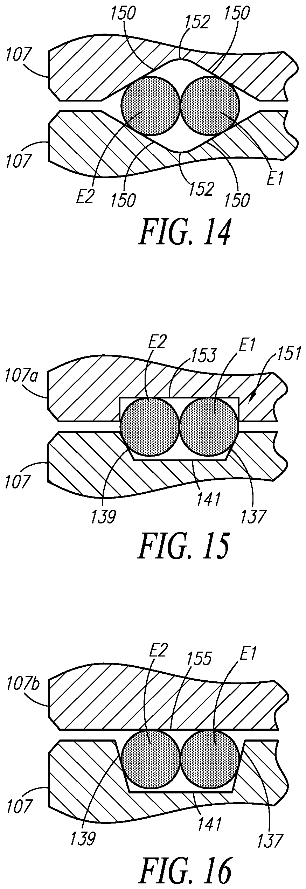

Figure 12 shows drive rolls 107 having annular grooves 143 with cross sections having an acute trapezoid shape instead of an isosceles trapezoid. The inner 145 and outer 147 sidewalls of the grooves have different lengths and form different angles with the outer circumferential surface of the drive rolls. In Figure 13, the drive rolls 107 have annular grooves 149 having a right trapezoid shape. Acute and right trapezoidal grooves can accommodate greater differences in welding wire diameters than isosceles trapezoids. Thus, acute and right trapezoidal grooves can be used when the groove is intended to drive welding wires having different diameters, such as a 0.040 inch welding wire with a 0.045 inch welding wire. In certain embodiments, the sidewalls and/or base of the grooves can be curved (e.g., concave or convex). Also, the inside corner transitions between the sidewalls and the base of the trapezoidal grooves can be curved or radiused. Figure 14 shows example drive rolls having annular grooves with straight, angled sidewalls 150 joined by a concave curved or radiused groove base 152. In an example embodiment, the angle between the sidewalls 150 and the outer circumference of the drive roll 107 is about 150°, although other angles are possible and can be determined with sound engineering judgment.

Figure 15 shows an example embodiment in which one drive roll 107 has a trapezoidal groove for the welding wires E1, E2, and the other drive roll 107a has a non-trapezoidal groove. In Figure 15, the non-trapezoidal groove is rectangular in shape, however other shapes are possible. For example, the non-trapezoidal groove could be curved, such as elliptical or rounded in shape. Further, the trapezoidal groove is shown as being located on the lower drive roll 107. However, the trapezoidal groove could be located on the upper drive roll 107a and the non-trapezoidal groove located on the lower drive roll. The welding wires E1, E2 are clamped between respective sidewalls 137, 139 of the trapezoidal groove and the base 153 of the non-trapezoidal groove 151, and the welding wires are forced into contact with each other as discussed above. Thus, the welding wires E1, E2 are stably held via three points of contact within the annular grooves 107, 107a.

Figure 16 shows an example embodiment in which one drive roll 107 has a trapezoidal groove for the welding wires E1, E2, and the other drive roll 107b has no groove, but rather directly contacts the welding wires on its outer circumferential surface 155. The trapezoidal groove is shown as being located on the lower drive roll 107. However, the trapezoidal groove could be located on the upper drive roll. The welding wires E1, E2 are clamped between respective sidewalls 137, 139 of the trapezoidal groove and the outer circumferential surface 155 of the upper drive roll 107b, and the welding wires are forced into contact with each other as discussed above. Thus, the welding wires E1, E2 are stably held via three points of contact.

It should be evident that this disclosure is by way of example and that various changes may be made by adding, modifying or eliminating details without departing from the scope of the preent invention as defined in the appended claims.

### REFERENCE NUMERALS

| | | | |
|---|---|---|---|
| 100 | welding system | 133 | goove |
| 101 | electrode source | 135 | groove |
| 102 | electrode source | 137 | sidewall |
| 103 | electrode source | 139 | sidewall |
| 104 | end flange | 141 | groove base |
| 105 | wire feeder | 143 | groove |
| 106 | end flange | 145 | sidewall |
| 107 | drive rolls | 147 | sidewall |
| 107a | drive roll | 149 | groove |
| 107b | drive roll | 150 | sidewall |
| 108 | barrel | 151 | groove |
| 109 | power supply | 153 | base |
| 110 | example spool | 155 | surface |
| 111 | welding torch | | |
| 112 | annular divider | | |
| 113 | liner | E1 | wire electrode |
| 120 | controller | E2 | wire electrode |
| 121 | welding output terminal | W | workpiece |
| 123 | drive motor | GMAW | gas metal arc welding |
| 125 | spring | SAW | submerged arc welding |
| 127 | rod | FCAW | flux-cored arc welding |
| 129 | lever | MCAW | metal-cored arc welding |
| 131 | recess | | |

## Claims

1. A welding or additive manufacturing wire drive system (100), comprising
a single welding wire spool (102, 110) having a first welding wire (E1) and a second welding wire (E2), wherein the first and second welding wires (E1, E2) are wound on the single wire spool (102, 110);
a first drive roll (107);
a second drive roll (107), wherein one or both of the first drive roll (107) and the second drive roll (107) has a circumferential groove (133);
the wire drive system (100) being **characterised by**:
the circumferential groove (133) comprises a first sidewall portion (137), a second sidewall portion (139) and a groove base (141, 152, 153) extending between the sidewalls portions (137, 139) and is designed to receive the two welding wires (E1, E2), wherein the system (100) is configured that the first welding wire (E1) is drawn from the single welding wire spool (102, 110), located between the first drive roll (107) and the second drive roll (107) in the circumferential groove (133); and
wherein the system (100) is configured that the second welding wire (E2) is drawn simultaneously with the first welding wire (E1) from the single welding wire spool (102, 110), located between the first drive roll (107) and the second drive roll (107) in the circumferential groove (133),
wherein system (100) is configured that the first welding wire (E1) contacts the second welding wire (E2) between the first drive roll (107) and the second drive roll (107), and wherein the system (100) is configured that the first welding wire (E1) further contacts the first sidewall portion (137, 147, 150) of the circumferential groove (133), and wherein the system (100) is configured that the second welding wire (E2) further contacts the second sidewall portion (139, 149, 150) of the circumferential groove (133), and
wherein the system (100) is configured that both of the first welding wire (E1) and the second welding wire (E2) are radially offset from a central portion of the circumferential groove (133).

2. The welding or additive manufacturing wire drive system according to claim 1, **characterized by**:
the first drive roll having the first circumferential groove comprising the first inner sidewall portion, the first outer sidewall portion, and the groove base being a first concave groove base (141, 152, 153);
the second drive roll having the second circumferential groove comprising the second inner sidewall portion, the second outer sidewall portion, and the groove base being a second concave groove base (141, 152, 153), wherein the second circumferential groove is aligned with the first circumferential groove, and wherein the first welding wire and the second welding wire are drawn from the single welding wire spool between the first drive roll and the second drive roll through both of the first circumferential groove and the second circumferential groove; and
a biasing member that biases the first drive roll toward the second drive roll to force the first welding wire to contact the second welding wire, wherein:
the first welding wire contacts each of the first inner sidewall portion, the second inner sidewall portion, and the second welding wire,
the second welding wire contacts each of the first outer sidewall portion, the second outer sidewall portion, and the first welding wire, and
the first welding wire and the second welding wire are offset from both of the first concave groove base and the second concave groove base.

3. The welding or additive manufacturing wire drive system of claim 1, wherein the central portion of the circumferential groove is concave.

4. The welding or additive manufacturing wire drive system according to one of the claims 1 to 3, **characterized by**:
the first drive roll and the second drive roll rotate in opposite directions thereby drawing the first welding wire and the second welding wire from the welding wire spool.

5. The welding or additive manufacturing wire drive system of one of the claims 1 to 4, wherein the first welding wire and the second welding wire have different diameters.

6. The welding or additive manufacturing wire drive system of one of the claims 1 to 5, wherein the first welding wire and the second welding wire have different compositions.

7. The welding or additive manufacturing wire drive system of one of the claims 1 to 6, wherein one of the first welding wire and the second welding wire is a solid welding wire and another one of the first welding wire and the second welding wire is a flux-cored welding wire.

8. The welding or additive manufacturing wire drive system of claim 7, wherein the first welding wire is a solid welding wire and the second welding wire is a flux-cored welding wire.

9. The welding or additive manufacturing wire drive system of one of the claims 1 to 6, wherein one of the first welding wire and the second welding wire is a solid welding wire and another one of the first welding wire and the second welding wire is a metal-cored welding wire.

10. The welding or additive manufacturing wire drive system of claim 9, wherein the first welding wire is a solid welding wire and the second welding wire is a metal-cored welding wire.

11. The welding or additive manufacturing wire drive system of one of the claims 1 to 10, wherein respective central portions of the first annular groove and the second annular groove are concave.

12. The welding or additive manufacturing wire drive system of one of the claims 1 to 11, wherein the welding wire spool includes a central barrel located between first and second end flanges, and an annular divider located along the central barrel between the first welding wire and the second welding wire.

## Patentansprüche

1. Drahtantriebssystem (100) zum Schweißen oder zur additiven Fertigung, das umfasst:
eine einzelne Schweißdrahtspule (102, 110), die einen ersten Schweißdraht (E1) und einen zweiten Schweißdraht (E2) aufweist, wobei der erste und der zweite Schweißdraht (E1, E2) auf die einzelne Drahtspule (102, 110) gewickelt sind;
eine erste Antriebsrolle (107);
eine zweite Antriebsrolle (107), wobei eine oder beide der ersten Antriebsrolle (107) und der zweiten Antriebsrolle (107) eine Umfangsnut (133) aufweisen;
wobei das Drahtantriebssystem (100) **dadurch gekennzeichnet ist, dass**:
die Umfangsnut (133) einen ersten Seitenwandabschnitt (137), einen zweiten Seitenwandabschnitt (139) und eine sich zwischen den Seitenwandabschnitten (137, 139) erstreckende Nutbasis (141, 152, 153) umfasst und zur Aufnahme der beiden Schweißdrähte (E1, E2) ausgebildet ist,
wobei das System (100) so konfiguriert ist, dass der erste Schweißdraht (E1) von der einzelnen Schweißdrahtspule (102, 110), die sich zwischen der ersten Antriebsrolle (107) und der zweiten Antriebsrolle (107) befindet, in der Umfangsnut (133) heruntergezogen wird; und
wobei das System (100) so konfiguriert ist, dass der zweite Schweißdraht (E2) gleichzeitig mit dem ersten Schweißdraht (E1) von der einzelnen Schweißdrahtspule (102, 110), die sich zwischen der ersten Antriebsrolle (107) und der zweiten Antriebsrolle (107) befindet, in der Umfangsnut (133) heruntergezogen wird; und
wobei das System (100) so konfiguriert ist, dass der erste Schweißdraht (E1) den zweiten Schweißdraht (E2) zwischen der ersten Antriebsrolle (107) und der zweiten Antriebsrolle (107) kontaktiert, und wobei das System (100) so konfiguriert ist, dass der erste Schweißdraht (E1) des Weiteren den ersten Seitenwandabschnitt (137, 147, 150) der Umfangsnut (133) kontaktiert, und wobei das System (100) so konfiguriert ist, dass der zweite Schweißdraht (E2) des Weiteren den zweiten Seitenwandabschnitt (139, 149, 150) der Umfangsnut (133) kontaktiert, und
wobei das System (100) so konfiguriert ist, dass sowohl der erste Schweißdraht (E1) als auch der zweite Schweißdraht (E2) radial von einem mittigen Abschnitt der Umfangsnut (133) versetzt sind.

2. Drahtantriebssystem zum Schweißen oder zur additiven Fertigung nach Anspruch 1, **dadurch gekennzeichnet, dass**:
wobei die erste Antriebsrolle die erste Umfangsnut aufweist, die den ersten inneren Seitenwandabschnitt, den ersten äußeren Seitenwandabschnitt und die Nutbasis, die eine erste konkave Nutbasis (141, 152, 153) ist, umfasst;
die zweite Antriebsrolle die zweite Umfangsnut aufweist, die den zweiten inneren Seitenwandabschnitt, den zweiten äußeren Seitenwandabschnitt und die Nutbasis, die eine zweite konkave Nutbasis (141, 152, 153) ist, umfasst, wobei die zweite Umfangsnut auf die erste Umfangsnut ausgerichtet ist, und wobei der erste Schweißdraht und der zweite Schweißdraht von der einzelnen Schweißdrahtspule zwischen der ersten Antriebsrolle und der zweiten Antriebsrolle sowohl über die erste Umfangsnut als auch über die zweite Umfangsnut heruntergezogen werden; und
ein Vorspannelement, das die erste Antriebsrolle in Richtung der zweiten Antriebsrolle vorspannt, um den ersten Schweißdraht in Kontakt mit dem zweiten Schweißdraht zu drängen, wobei:
der erste Schweißdraht jeden des ersten inneren Seitenwandabschnitts, des zweiten inneren Seitenwandabschnitts und des zweiten Schweißdrahts kontaktiert,
der zweite Schweißdraht jeden des ersten äußeren Seitenwandabschnitts, des zweiten äußeren Seitenwandabschnitts und des ersten Schweißdrahts kontaktiert, und
der erste Schweißdraht und der zweite Schweißdraht sowohl von der ersten konkaven Nutbasis als auch von der zweiten konkaven Nutbasis versetzt sind.

3. Drahtantriebssystem zum Schweißen oder zur additiven Fertigung nach Anspruch 1, wobei der mittige Abschnitt der Umfangsnut konkav ist.

4. Drahtantriebssystem zum Schweißen oder zur additiven Fertigung nach einem der Ansprüche 1 bis 3, **dadurch gekennzeichnet, dass**:
sich die erste Antriebsrolle und die zweite Antriebsrolle in entgegengesetzte Richtungen drehen und dabei den ersten Schweißdraht und den zweiten Schweißdraht von der Schweißdrahtspule herunterziehen.

5. Drahtantriebssystem zum Schweißen oder zur additiven Fertigung nach einem der Ansprüche 1 bis 4, wobei der erste Schweißdraht und der zweite Schweißdraht verschiedene Durchmesser haben.

6. Drahtantriebssystem zum Schweißen oder zur additiven Fertigung nach einem der Ansprüche 1 bis 5, wobei der erste Schweißdraht und der zweite Schweißdraht verschiedene Zusammensetzungen haben.

7. Drahtantriebssystem zum Schweißen oder zur additiven Fertigung nach einem der Ansprüche 1 bis 6, wobei einer des ersten Schweißdrahtes und des zweiten Schweißdrahtes ein Vollschweißdraht ist und ein anderer des ersten Schweißdrahtes und des zweiten Schweißdrahtes ein Fülldraht ist.

8. Drahtantriebssystem zum Schweißen oder zur additiven Fertigung nach Anspruch 7, wobei der erste Schweißdraht ein Vollschweißdraht ist und der zweite Schweißdraht ein Fülldraht ist.

9. Drahtantriebssystem zum Schweißen oder zur additiven Fertigung nach einem der Ansprüche 1 bis 6, wobei einer des ersten Schweißdrahtes und des zweiten Schweißdrahtes ein Vollschweißdraht ist und ein anderer des ersten Schweißdrahtes und des zweiten Schweißdrahtes ein Metallpulverdraht ist.

10. Drahtantriebssystem zum Schweißen oder zur additiven Fertigung nach Anspruch 9, wobei der erste Schweißdraht ein Vollschweißdraht ist und der zweite Schweißdraht ein Metallpulverdraht ist.

11. Drahtantriebssystem zum Schweißen oder zur additiven Fertigung nach einem der Ansprüche 1 bis 10, wobei die jeweiligen mittigen Abschnitte der ersten ringförmigen Nut und der zweiten ringförmigen Nut konkav sind.

12. Drahtantriebssystem zum Schweißen oder zur additiven Fertigung nach einem der Ansprüche 1 bis 11, wobei die Schweißdrahtspule eine mittige Trommel aufweist, die zwischen einem ersten und einem zweiten Endflansch angeordnet ist, und einen ringförmigen Teiler aufweist, der entlang der mittigen Trommel zwischen dem ersten Schweißdraht und dem zweiten Schweißdraht angeordnet ist.

## Revendications

1. Système d'entraînement de fil de soudage ou de fabrication additive (100), comprenant
une bobine de fil de soudage unique (102, 110) comportant un premier fil de soudage (E1) et un deuxième fil de soudage (E2), dans lequel les premier et deuxième fils de soudage (E1, E2) sont enroulés sur la bobine de fil unique (102, 110) ;
un premier rouleau d'entraînement (107) ;
un deuxième rouleau d'entraînement (107), dans lequel l'un ou les deux du premier rouleau d'entraînement (107) et du deuxième rouleau d'entraînement (107) présentent une rainure circonférentielle (133) ;
le système d'entraînement de fil (100) étant **caractérisé en ce que** :
la rainure circonférentielle (133) comprend une première partie de paroi latérale (137), une deuxième partie de paroi latérale (139) et une base de rainure (141, 152, 153) s'étendant entre les parties de paroi latérale (137, 139) et est conçue pour recevoir les deux fils de soudage (E1, E2),
dans lequel le système (100) est configuré de sorte que le premier fil de soudage (E1) soit tiré de la bobine de fil de soudage unique (102, 110), située entre le premier rouleau d'entraînement (107) et le deuxième rouleau d'entraînement (107) dans la rainure circonférentielle (133) ; et
dans lequel le système (100) est configuré de sorte que le deuxième fil de soudage (E2) soit tiré simultanément avec le premier fil de soudage (E1) de la bobine de fil de soudage unique (102, 110), située entre le premier rouleau d'entraînement (107) et le deuxième rouleau d'entraînement (107) dans la rainure circonférentielle (133),
dans lequel le système (100) est configuré de sorte que le premier fil de soudage (E1) vienne au contact du deuxième fil de soudage (E2) entre le premier rouleau d'entraînement (107) et le deuxième rouleau d'entraînement (107), et dans lequel le système (100) est configuré de sorte que le premier fil de soudage (E1) vienne en outre au contact de la première partie de paroi latérale (137, 147, 150) de la rainure circonférentielle (133), et dans lequel le système (100) est configuré de sorte que le deuxième fil de soudage (E2) vienne en outre au contact de la deuxième partie de paroi latérale (139, 149, 150) de la rainure circonférentielle (133), et
dans lequel le système (100) est configuré de sorte que le premier fil de soudage (E1) et le deuxième fil de soudage (E2) soient décalés radialement par rapport à une partie centrale de la rainure circonférentielle (133).

2. Système d'entraînement de fil de soudage ou de fabrication additive selon la revendication 1, **caractérisé par** :
le premier rouleau d'entraînement comportant la première rainure circonférentielle comprenant la première partie de paroi latérale intérieure, la première partie de paroi latérale extérieure et la base de rainure étant une première base de rainure concave (141, 152, 153) ;
le deuxième rouleau d'entraînement comportant la deuxième rainure circonférentielle comprenant la deuxième partie de paroi latérale intérieure, la deuxième partie de paroi latérale extérieure et la base de rainure étant une deuxième base de rainure concave (141, 152, 153), dans lequel la deuxième rainure circonférentielle est alignée sur la première rainure circonférentielle, et dans lequel le premier fil de soudage et le deuxième fil de soudage sont tirés de la bobine de fil de soudage unique entre le premier rouleau d'entraînement et le deuxième rouleau d'entraînement à travers à la fois la première rainure circonférentielle et la deuxième rainure circonférentielle ; et
un élément de sollicitation qui sollicite le premier rouleau d'entraînement vers le deuxième rouleau d'entraînement pour forcer le premier fil de soudage à venir au contact du deuxième fil de soudage, dans lequel :
le premier fil de soudage vient au contact de chacun de la première partie de paroi latérale intérieure, de la deuxième partie de paroi latérale intérieure et du deuxième fil de soudage,
le deuxième fil de soudage vient au contact de chacun de la première partie de paroi latérale extérieure, de la deuxième partie de paroi latérale extérieure et du premier fil de soudage, et
le premier fil de soudage et le deuxième fil de soudage sont décalés par rapport à la fois à la première base de rainure concave et la deuxième base de rainure concave.

3. Système d'entraînement de fil de soudage ou de fabrication additive selon la revendication 1, dans lequel la partie centrale de la rainure circonférentielle est concave.

4. Système d'entraînement de fil de soudage ou de fabrication additive selon l'une des revendications 1 à 3, **caractérisé par** :
le premier rouleau d'entraînement et le deuxième rouleau d'entraînement tournent dans des directions opposées en tirant de ce fait le premier fil de soudage et le deuxième fil de soudage de la bobine de fil de soudage.

5. Système d'entraînement de fil de soudage ou de fabrication additive selon l'une des revendications 1 à 4, dans lequel le premier fil de soudage et le deuxième fil de soudage présentent des diamètres différents.

6. Système d'entraînement de fil de soudage ou de fabrication additive selon l'une des revendications 1 à 5, dans lequel le premier fil de soudage et le deuxième fil de soudage présentent des compositions différentes.

7. Système d'entraînement de fil de soudage ou de fabrication additive selon l'une des revendications 1 à 6, dans lequel l'un du premier fil de soudage et du deuxième fil de soudage est un fil de soudage plein et un autre du premier fil de soudage et du deuxième fil de soudage est un fil de soudage fourré.

8. Système d'entraînement de fil de soudage ou de fabrication additive selon la revendication 7, dans lequel le premier fil de soudage est un fil de soudage plein et le deuxième fil de soudage est un fil de soudage fourré.

9. Système d'entraînement de fil de soudage ou de fabrication additive selon l'une des revendications 1 à 6, dans lequel l'un du premier fil de soudage et du deuxième fil de soudage est un fil de soudage plein et un autre du premier fil de soudage et du deuxième fil de soudage est un fil de soudage fourré à poudre métallique.

10. Système d'entraînement de fil de soudage ou de fabrication additive selon la revendication 9, dans lequel le premier fil de soudage est un fil de soudage plein et le deuxième fil de soudage est un fil de soudage fourré à poudre métallique.

11. Système d'entraînement de fil de soudage ou de fabrication additive selon l'une des revendications 1 à 10, dans lequel des parties centrales respectives de la première rainure annulaire et de la deuxième rainure annulaire sont concaves.

12. Système d'entraînement de fil de soudage ou de fabrication additive selon l'une des revendications 1 à 11, dans lequel la bobine de fil de soudage comprend un cylindre central situé entre des première et deuxième brides d'extrémité, et un diviseur annulaire situé le long du cylindre central entre le premier fil de soudage et le deuxième fil de soudage.
